# EUROPEAN PATENT SPECIFICATION

(11) **EP 0 708 512 B1**
(45) Date of publication and mention of the grant of the patent: **03.03.1999**
(21) Application number: 95202837.1
(22) Date of filing: 19.10.1995
(51) Int. Cl.: H02B 1/48

(54) **Interior system for a switch box and component module and bearer module suitable therefor**
Innenraumsystem für einen Schaltschrank und dafür geeigneter Komponentenmodul und Trägermodul
Système intérieur pour une armoire de commutation et module de composants et module de support approprié

(30) Priority: 21.10.1994 NL 9401755
(43) Date of publication of application: 24.04.1996
(73) Proprietor: HOLEC HOLLAND N.V., 7555 CS Hengelo (NL)
(72) Inventor: de Haas, Wijnand Maria Arnoldus, NL-7109 BN Winterswijk (NL); Tanuhardja, Mike Mulijana, NL-7559 JR Hengelo (NL)
(74) Representative: de Bruijn, Leendert C.

(56) References cited:
- EP-A- 0 186 556
- DE-B- 1 271 802
- DE-C- 3 642 518
- US-A- 3 787 713
- HOLEC publication number 26.3 entitled "N.S.-verteilersystem PLANITOLE-IC in Stahlblechgehäuse" and bearing the reference 26.3-D1.103.30

## Description

The present invention relates to an interior system for a switch box for distribution of power from an external power feed to a consumer installation, comprising a frame, one or more component modules and a bus bar system which can be connected to the external power feed, wherein each component module, has a bearer comprising one or more bearer modules (20) and provided with fixing means for one or more electrical components, and is provided with fixing means for detachably fixing said component module to the frame in various positions, first connection means for connecting said one or more components to the rail system and second connection means for connecting to power and/or signal leads on the consumer side, wherein the second connection means are positioned at one end of the bearer.

A system of this type is known in practice and is marketed by the Applicant itself under the name "Planitole".

With this known system the component modules are distributed over the entire box and fixed in place. The feed and output connection wiring of the component modules is, in each case, fed to and, respectively, from, the component modules and/or the electrical components themselves. The component modules themselves and/or the composition according to type are, in each case, adapted to the desired design of the consumer installation and equipped.

This known system has the disadvantage that the installation thereof is labour-intensive, which in general has the effect of raising costs and increases the risk of errors/mistakes. This is equally true in the case of necessary modifications/expansions later on.

The aim of the invention specified in the preamble is to alleviate the abovementioned disadvantages.

According to the invention as defined in claim 1 this is achieved in that the first connection means are positioned at the opposing end of the bearer and in that the bus bar system comprises a plurality of bus bars which run essentially in one plane, some distance apart and parallel to one another, which plane is essentially perpendicular to the plane of the access opening of the switch box and extends in the vicinity of one of the sides of the switch box. The invention also includes a component module as defined in claim 8 and a bearer module as defined in claim 10.

Up to now the procedure for hand-over of a switch box to the customer has been as follows. The component modules are produced in the factory and, if appropriate, provided with electrical components, in each case depending on the relevant desired specification (layout) of the consumer installation. As soon as all component modules are ready, the modules are fitted in the box by panel builders, the electrical connections connecting the components to one another within a component module or the electrical connections between different component modules optionally being made. Just before hand-over, the remaining connections from the consumer installation and the external power feed to the component modules are made by an installer.

The invention is based on the insight that by transferring the activities of the panel builders and installers as far as possible to the factory process, the activities at the location of the switch box are restricted to a minimum and the risk of errors is kept as low as possible. As a result of application of the invention, the installer merely has to position the component module in the box, by which procedure the power feed is also connected to one side of the component module and, at the other opposing side, to make the connections between the connection means and the consumer installation and/or to one another.

The invention also has the advantage that extensive standardisation of the component modules is possible. Despite a diversity of possible functions, a small number of standardised component modules can suffice, which modules then merely have to differ from one another in width. This has the advantage that fewer types of components can be produced in larger numbers and also that stock holdings can remain limited, which has a beneficial effect on the cost price. Moreover, the installation time is substantially reduced.

In a preferred embodiment, the system is provided with at least one component module in the form of a feed module with feed components for making a connection between the external power feed (for example a riser) and the bus bar system, wherein the second connection means of the feed module are equipped for connecting the feed components to the external power feed, the energy direction through the at least one feed module being counter to the energy direction through other component module(s).

This embodiment has the advantage that the connection between the external power feed and the bus bar system can be made rapidly and simply and that the bus bar system is suitable, without further separate wiring, for direct, simultaneous power supply to several component modules.

All requisite component modules can be supplied pre-wired, that is to say provided with components and requisite wiring, with the result that the installation of the system according to the invention will be less time consuming. The pre-wired component modules can, moreover, all be provided with a safety mark, as a result of which the installation can (moreover) be carried out more safely and the modules no longer have to be tested individually on site.

In a further embodiment the system is provided with a residual module which has a mounting plate, detachably fixed to the frame, for non-standardised and/or special electrical components. As a result of the use of the residual module, the component modules only have to comprise electrical components which have standardised fixing means and components which can be used frequently and widely in every consumer installation. Further standardisation of the switch box layout and/or the component modules can be implemented by an appropriately flexible choice of the relative positioning of the residual module and the other component modules.

In a suitable embodiment, the bus bar system is divided into a sub-bus bar system for component modules for power groups and a sub-bus bar system which runs as an extension thereof, but is electrically insulated therefrom, for lighting groups. By this means a flexible division is achieved between the number of power groups and lighting groups, it being possible for the two custom length sub-bus bar systems to be inserted on either side of the frame.

In an advantageous embodiment, the bearer for each component module comprises one or more bearer modules, where, even in the case of several bearer modules, the component module is provided with an individual cover plate, which extends some distance above the bearer modules over the entire front of the relevant component module, the bearer modules being provided with fixing means or some of the fixing means for electrical components.

The cover plates can be supplied in a form suitable for assembly, since the shape and dimensions of the pre-wired component modules (or combinations thereof) supplied are known. This makes it superfluous to make openings, on site, in a single cover plate which covers all components, as is customary according to the prior art. In the case of maintenance or replacement as well, it will in future be necessary merely to remove the cover plate from the component module concerned instead of removing the entire cover plate from the switch box. Therefore, not only installation but also maintenance and replacement are less labour intensive with this embodiment, which saves costs and is safer.

In a further preferred embodiment, the frame comprises at least one support component, which is provided with a toothed pattern, and the fixing means for each component module comprise at least one locating ridge for positioning the relevant component module in the support component.

This preferred embodiment likewise promotes rapid installation of the system by reducing the number of operations required.

In a preferred embodiment, a bearer module as described above is made of plastic, for example a thermoplastic.

In another advantageous embodiment, a bearer module according to the invention comprises fixing means for detachably fixing two or more bearer modules to one another.

This embodiment makes it possible to fix components which are appreciably wider than the width of one bearer module on a combination of two or more bearer modules. This appreciably increases the flexibility of the system according to the invention.

A bearer module preferably has a cross-section in the shape of an I-section, at least in the region of the fixing means for the electrical component. The wiring between the components of a module and between the components and the first and second connection means can be accommodated and concentrated in the cavities delimited by the I-shape, with the result that space can be saved. The cavities in the I-section of the bearer module are preferably at least partially closed off by closure means or bridges.

The invention will be explained in more detail with the aid of an illustrative embodiment, with reference to the drawings, in which:
Figure 1 shows an exposed front view of a switch box provided with part of an interior system according to the invention,
Figure 2 shows an exposed side view of the switch box from Figure 1,
Figure 3 shows a side view of a base section of a component module according to the invention,
Figure 4 shows a front view of the base section from Figure 3,
Figure 5 shows a side view of a component module provided with six components,
Figure 6 shows a front view of the component module from Figure 5,
Figure 7 shows a side view of two component modules according to the invention, which are fixed to one another and provided with three components, and
Figure 8 shows a front view of the combination from Figure 7.

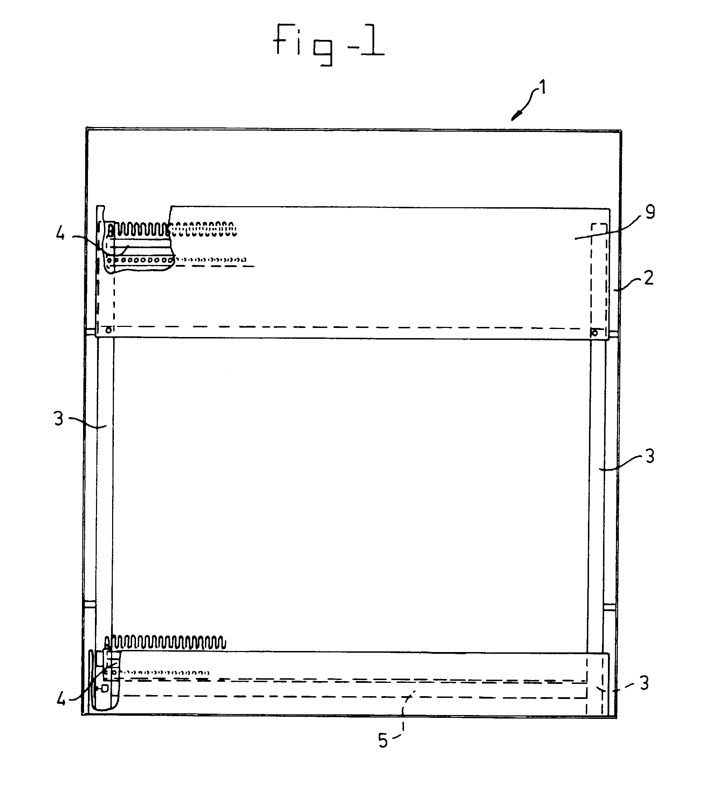

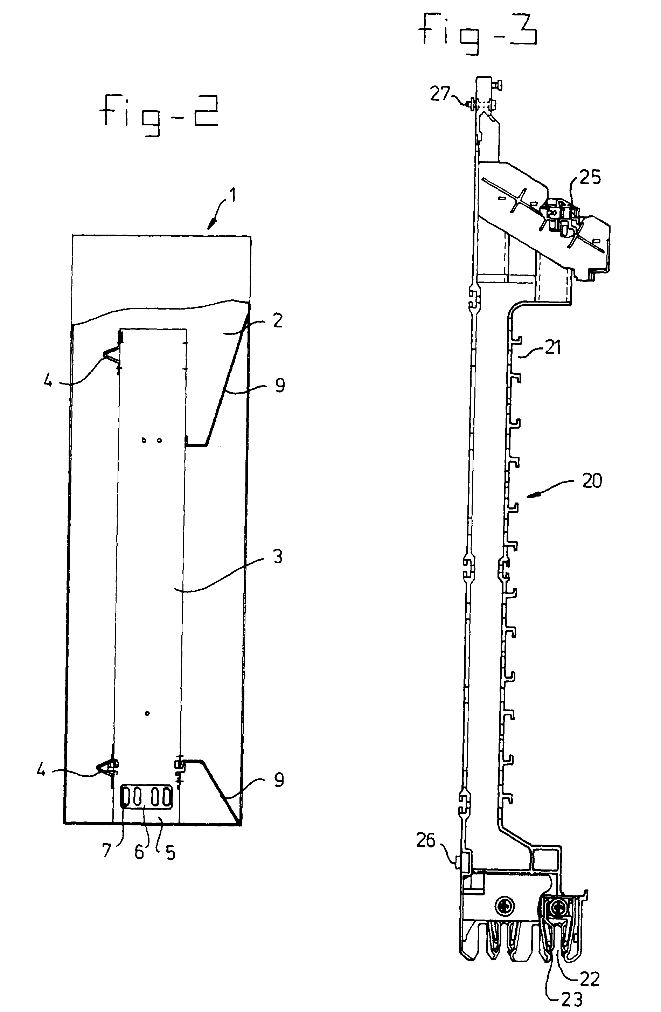

Figure 1 shows an exposed switch box 1 provided with part of an interior system according to the invention. In the preferred embodiment, the frame 2 shown consists of two vertical flanks 3, between which two horizontal support components 4 and the bus bar system 5 are arranged. The horizontal support components 4 are provided with a toothed pattern, preferably with a spacing of 9 mm, for positioning component modules which may or may not be made up of bearer modules (see Figs. 3 to 8). The flanks 3 and support components 4 can be made of a suitable material, such as plastic or metal, but are preferably made of 1.5 mm galvanised sheet steel.

In Fig. 2, in which a side view of the interior system from Fig. 1 is shown, it can be seen that the bus bar system 5 is provided with bus bar retainer blocks 6, preferably made of plastic, in which four bus bars 7 have been located. The frame 2 is fixed in the pre-assembled state in the box 1 on the horizontal strips arranged at the top and bottom of the box. The frame is suitable for fitting in all known switch boxes. After mounting the frame in the box, protective covers 9 are arranged at the location of the connections for the component modules fitted in the frame (see Fig. 1). The protective covers 9 are preferably made of robust plastic sheet and are fixed to strips (not shown) in the box by means of plastic quick-release fasteners.

In the preferred embodiment, the interior system comprises three types of component modules: feed modules (for connecting the rail system to an external power feed) and power and lighting modules as output groups. Said component modules can be plugged, by means of connection means to be connected to the electrical components, into the bus bar system 5 and are fixed in the two support components 4. The sequence in which the component modules are placed in position can be arbitrarily chosen and can be matched to the desired situation. All three variants are based on one or more bearer modules, hereinafter referred to as the base section 20, a side view of which is shown in Figure 3. The base section 20 is provided with fixing means or accommodating means 21 for accommodating components, which means 21 are, for example, in the form of standardised top hat profiles. The number of accommodating means is variable and can be tailored to the need. The accommodating means 21 are suitable for accommodating all components which comply with the relevant standard (for example DIN). The base section 20 can be plugged into the bus bar system 5 by means of first connection means 23, which can be arranged in openings 22 in the base section 20. Standard plug-in bus bar contact clips can be used as the first connection means 23, in order to provide a guaranteed contact with the bus bar system. At the other end of the accommodating means 21, the base section 20 of the component module is provided with second connection means 25, which are arranged in openings 24 in the section 20.

For the feed modules, standard screw clamp connections can be used as the second connection means 25 for connecting the feed module to the incoming power feed cable or the branch from a riser (not shown). For the power and lighting groups, standard screw clamp connections which, for example, are suitable for wire diameters of 1.5 mm² - 16 mm² and are provided with a coding, for example L1, L2, L3, N, etc., can be used as the second connection means 25. In use, the energy direction through the feed modules will be counter to the energy direction through the other component modules (for example power and lighting modules). All component modules are of pre-wired design, that is to say provided with components and wiring between them (running from the rail clips 23 via the components to the second connection means 25).

The base section 20 is provided with fixing means for detachably fixing said section to the frame 2 in various positions. Said fixing means comprise a locating ridge 26 for positioning the relevant component module in the lower support component 4 and a locating block 27 for positioning the relevant component module in the upper support component 4. The locating ridge 26 is of slidable construction, so that optimum use can be made of the space in the switch box. The locating block 27 can be fixed simply at the top of the component module, for example with the aid of a screw, and can also serve as earth connection and, if desired, is also slidable transversely to the section 20.

In a preferred embodiment, the base section 20 has a cross-section in the shape of an I-section, at least in the region of the accommodating means 21. The requisite wiring can be accommodated in a space-saving manner in the cavities delimited by the I-section beneath the accommodating means 21.

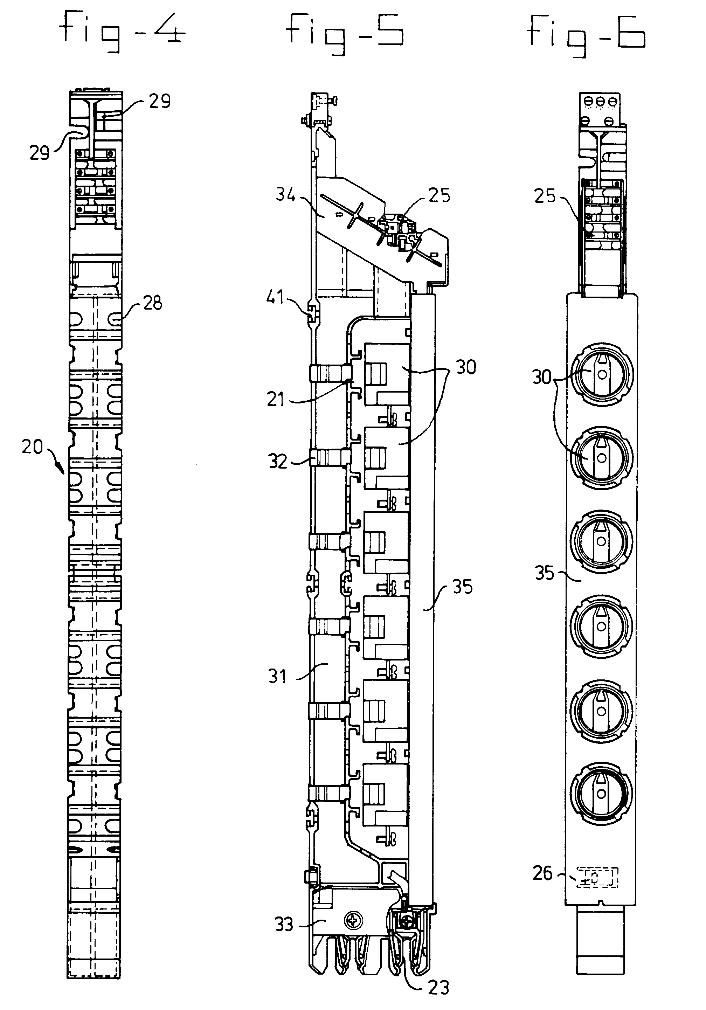

In Figure 4, in which a front view of the base section 20 of the component module from Figure 3 is shown, recesses 28 are visible in which the wires to be run in the cavities in the I-section 20 for wiring of the electrical components can be concealed. Purchase holes 29 are also provided for easy insertion and removal of the modules, for which purpose, for example, a screwdriver can be used as a lever.

The base section is preferably made of a plastic material, for example a thermoplastic. Because the production of such a base section for a component module according to the invention is elaborate, said section is preferably constructed as an injection moulded component.

Figure 5 shows a side view of an example of a pre-wired component module provided with six components 30. For this purpose, the base section provided with six accommodating means 21 from Figures 3 and 4 is used as a basis. The wiring in this output module runs from the first connection means 23 via the components 30 through the cavity in the I-section 31 to the second connection means 25. With this arrangement, the wiring is clamped in the cavity 31 with the aid of closure or clamping means 32. The first and second connection means 23, 25 are protected with the aid of blanking plates 33 and 34. The components 30 fitted are protected by a separate cover plate 35 which extends over the entire width of the component module.

Pre-wired component modules can be supplied in a number of standard variations. A separate cover plate is provided for all of these variations. In the prior art up to now only one cover plate has been used for covering all components in a switch box. This has the disadvantage that on site, after all components have been installed, the cover plate must be provided with openings through which component parts can protrude to the outside. This is a labour-intensive, and therefore cost-raising, process, which becomes superfluous as a result of the present invention.

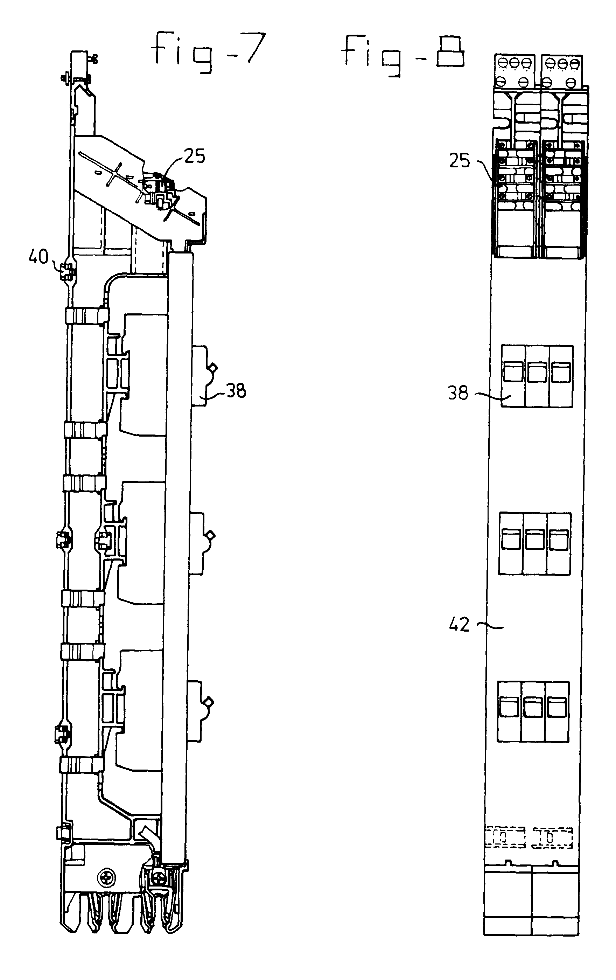

Figure 6 shows a front view of the pre-wired component module from Fig 5.

To increase the flexibility of the interior system according to the invention, each base section comprises fixing means for detachably fixing two or more base sections to one another, so that components which are too wide for mounting on one base section can be fixed to two adjoining base sections. Figure 7 shows, by way of illustration, a side view of an example of two bearer modules fixed to one another and provided with three components 38 (circuit breakers). This component module comprises two base sections, each with only three accommodating means. The said fixing means can comprise, for example, clamping means 40, which can be slidably arranged in openings 41.

Figure 8 shows a front view of the example from Fig 7. The illustrated pre-wired combination of two base sections fixed to one another is provided with a separate cover plate 42.

In addition to the said feed modules, power groups and lighting groups, a residual module which has a mounting plate which is suitable for mounting components which do not fit in the standard component modules or are used only sporadically is also provided in a preferred embodiment of the interior system. The mounting plate is preferably an empty component module of flanged Sendzimir, which can be fitted in the switch box at a depth which is infinitely variable. Connections can be made from the mounting plate, either to adjacent component modules or to outside the switch box.

A multiplicity of interior systems according to the invention can be fitted in one switch box. To this end, the rail retaining blocks can be so constructed that bus bars, which do not touch one another, can be inserted on either side of the bus bar retaining block, so that the bus bar systems for the various interior systems can be kept separate. A separation between lighting and power groups can, for example, be achieved in this way. It will be clear that a separate feed module can be fitted in each individual interior system in the switch box.

In the preferred embodiment described, the switch box provided with an interior system according to the invention has a protection level of IP 43 when the door is closed. When the door is open, the protection level is IP 20.

## Claims

1. Interior system for a switch box (1) for distribution of power from an external power feed to a consumer installation, comprising a frame (2), one or more component modules and a bus bar system (5) which can be connected to the external power feed, wherein each component module has a bearer comprising one or more bearer modules (20) and provided with fixing means (21) for one or more electrical components (30), and is provided with fixing means for detachably fixing said component module to the frame in various positions, first connection means (23) for connecting said one or more components to the bus bar system (5) and second connection means (15) for connecting to power and/or signal leads, wherein the second connection means (25) are located at one end of the bearer (20), characterised in that the first connection means (23) are located at the opposing end of the bearer and in that the bus bar system (5) comprises a plurality of bus bars (7) which run essentially in one plane, some distance apart and parallel to one another, which plane is essentially perpendicular to the plane of the access opening of the switch box (1) and extends in the vicinity of one of the sides of the switch box (1).

2. Interior system according to claim 1, **characterized** in that the system is provided with at least one component module in the form of a feed module with feed components for making a connection between the external power feed, for example a riser, and the bus bar system (5), wherein the second connection means (25) of the feed module are equipped for connecting the feed components to the external power feed, the energy direction through the at least one feed module being counter to the energy direction through other component module(s).

3. Interior system according to claim 1 or 2, **characterized** in that the system is provided with a residual module which has a mounting plate, detachably fixed to the frame (2), for non-standarised and/or special electrical components.

4. Interior system according to claim 1, 2 or 3, **characterized** in that the bus bar system (5) is divided into a sub-bus bar system for component modules for power groups and a sub-bus bar system which runs as an extension thereof, but is electrically insulated therefrom, for lighting groups.

5. Interior system according to one of the preceding claims, **characterized** in that even in the case of a component module comprising several bearer modules, the component module is provided with an individual cover plate (35), which extends some distance above the bearer modules (20) over the entire front of the relevant component module, the bearer modules being provided with fixing means (21) or some of the fixing means for electrical components.

6. Interior system according to one of the preceding claims, **characterized** in that the frame (2) comprises at least one support component (4), which is provided with a toothed pattern, and in that the component module has at least one locating ridge (26) for positioning the relevant component module in the support component (4).

7. Interior system according to claim 6, **characterized** in that the frame (2) is provided with at least two support components provided with a toothed pattern, which support components can be fitted essentially parallel to one another, and in that the component module is also provided with a locating block (27) for positioning the relevant component module in the second support component (4).

8. Component module suitable for an interior system described in one of the preceding claims, the component module having
a bearer comprising one or more bearer modules (20) and provided with fixing means (21) for one or more electrical components (30),
wherein the component module is provided with
fixing means (26, 27) for detachably fixing said component module to a frame (2) of said interior system in various positions,
first connection means (23) for connecting the one or more components (30) to a bus bar system (5) of said interior system, and
second connection means (25) for connecting to power and/or signal leads,
wherein
the second connection means (25) are located at one end of the component module
characterised in that
the first connection means (23) are located at the opposing end of the component module and
the first connection means (23) comprises a plurality of contacts arranges so as to be suitable for connection to a plurality of bus bars (7) of the interior system bus bar system (5), which bus bars (7) run essentially in one plane, some distance apart and parallel to one another, which plane is essentially perpendicular to a line passing through the opposing ends of the component module.

9. Component module according to claim 8, **characterized** in that the component module is in form of a feed module with feed components for making a connection between the external power feed, for example a riser, and the bus bar system (5), wherein the second connection means (25) of the feed module are equipped for connecting the feed components to the external power feed, the energy direction through the at least one feed module being counter to the energy direction through other component module(s).

10. Bearer module (20) suitable for an interior system described in one of the preceding claims, the bearer module (20) comprising
fixing means (21) for one or more electrical components (30),
fixing means (26, 27) for detachably fixing said bearer module to a frame (2) of said interior system in various positions,
first connection means (23) for connecting the one or more components (30) to a bus bar system (5) of said interior system and
second connection means (25) for connecting to power and/or signal leads,
wherein
the second connection means (25) are located at one end of the bearer module (20)
characterised in that
the first connection means (23) are located at the opposing end of the bearer module (20) and
the first connection means (23) comprises a plurality of contacts arranged so as to be suitable for connection to a plurality of bus bars (7) of the interior system bus bar system (5), which bus bars (7) run essentially in one plane, some distance apart and parallel to one another, which plane is essentially perpendicular to a line passing through the opposing ends of the bearer module (20).

11. Bearer module (20) according to claim 10, **characterized** in that fixing means (40) are provided for detachably fixing two or more bearer modules (20) to one another.

12. Bearer module (20) according to claim 10 or 11, **characterized** in that the bearer module (20) has a cross-section in the shape of an I-section, at least in the region of the fixing means (21) for the electrical component.

13. Bearer module (20) according to claim 12, **characterized** in that closure means (32) are provided for at least partially closing off the cavities (31) in the I-section of the bearer module (20).

14. Bearer module (20) according to one of claims 10 to 13, **characterized** in that said module (20) is made of plastic, for example a thermoplastic.

15. Bearer module (20) according to one of claims 10 to 14, **characterized** in that said module is an injection moulded component.

## Patentansprüche

1. Innenraumsystem für einen Schaltschrank (1) zur Energieverteilung von einer externen Energiezufuhr zu einer Verbraucherstelle, welches umfaßt: einen Rahmen (2), ein oder mehrere Komponentenmodule, und ein Sammelschienensystem (5), welches mit der externen Energiezufuhr verbunden werden kann, wobei jeder Komponentenmodul einen Träger aufweist, welcher einen oder mehrere Trägermodule (20) aufweist und mit einer Fixiereinrichtung (21) für eine oder mehrere elektrische Komponenten (30) mit einer Fixiereinrichtung zum lösbaren Befestigen des Komponentenmoduls an dem Rahmen in verschiedenen Positionen, mit einer ersten Verbindungseinrichtung (23) zum Verbinden der einen oder mehreren Komponenten mit dem Sammelschienensystem (5) und mit einer zweiten Verbindungseinrichtung (25) zum Verbinden mit Energie- und/oder Signalleitungen versehen ist, wobei die zweite Verbindungseinrichtung (25) an einem Ende des Trägers (20) angeordnet ist, dadurch gekennzeichnet, daß die erste Verbindungseinrichtung (23) am gegenüberliegenden Ende des Trägers (20) angeordnet ist, und daß das Sammelschienensystem (5) eine Mehrzahl von Sammelschienen (7) umfaßt, welche im wesentlichen in einer Ebene verlaufen, mit einem Abstand voneinander und parallel zueinander verlaufen, welche Ebene sich im wesentlichen senkrecht zu der Ebene der Zugriffsöffnüng des Schaltschrankes (1) und in der Nähe einer der Seiten des Schaltschrankes (1) erstreckt.

2. Innenraumsystem nach Anspruch 1, dadurch gekennzeichnet, daß das System mit mindestens einem Komponentenmodul in der Form eines Zuführmoduls mit Zuführbauteilen, um eine Verbindung zwischen der externen Energiezufuhr, beispielsweise eine Steigleitung (Riser), und dem Sammelschienensystem (5) herzustellen, wobei die zweite Verbindungseinrichtung (25) des Zuführmoduls zum Verbinden der Zuführkomponenten mit der externen Energiezufuhr ausgestattet ist, wobei die Energierichtung durch mindestens einen Zuführmodul entgegengesetzt der Energierichtung durch andere Komponentenmodul(e) ist.

3. Innenraumsystem nach Anspruch 1 oder 2, dadurch gekennzeichnet, daß das System mit einer verbleibenden Komponente versehen ist, welche eine Montageplatte für nicht-normierte und/oder besondere elektrische Komponenten aufweist, welche an dem Rahmen (2) lösbar befestigt ist.

4. Innenraumsystem nach Anspruch 1, 2 oder 3, dadurch gekennzeichnet, daß das Sammelschienensystem (5) in ein Untersammelschienensystem für Komponentenmodule für Energiegruppen und ein Untersammelschienensystem für Beleuchtungsgruppen unterteilt ist, welches als dessen Erstreckung verläuft, jedoch davon elektrisch isoliert ist.

5. Innenraumsystem nach einem der vorherigen Ansprüche, dadurch gekennzeichnet, daß selbst in dem Fall, daß ein Komponentenmodul mehrere Trägermodule aufweist, der Komponentenmodul mit einer individuellen Abdeckplatte (35) versehen ist, welche sich in einem Abstand oberhalb der Trägermodule (20) über die gesamte Vorderseite des relevanten Komponentenmoduls erstreckt, wobei die Trägermodule mit einer Fixiereinrichtung (21) oder mehreren Fixiereinrichtungen für elektrische Komponenten versehen sind.

6. Innenraumsystem nach einem der vorherigen Ansprüche, dadurch gekennzeichnet, daß der Rahmen (2) mindestens eine Stützkomponente (4) aufweist, welche mit einem Zahnmuster versehen ist, und daß der Komponentenmodul mindestens einen Aufnahmerücken (26) zum Positionieren des relevanten Komponentenmoduls in der Stützkomponente (4) aufweist.

7. Innenraumsystem nach Anspruch 6, dadurch gekennzeichnet, daß der Rahmen (2) mit mindestens zwei Stützkomponenten mit einem Zahnmuster versehen ist, die Stützkomponenten im wesentlichen parallel zueinander eingepaßt werden können, und daß der Komponentenmodul mit einem Positionierblock (27) versehen ist, um den relevanten Komponentenmodul in der zweiten Stützkomponente (4) zu positionieren.

8. Komponentenmodul, geeignet für ein Innenraumsystem, nach einem der vorherigen Ansprüchen, wobei der Komponentenmodul aufweist:
einen Träger, welcher einen oder mehrere Trägermodule (20) umfaßt und mit einer Fixiereinrichtung (21) für eine oder mehrere elektrische Komponenten (30) versehen ist, wobei der Komponentenmodul mit einer Fixiereinrichtung (26, 27) zum lösbaren Befestigen des Komponentenmoduls an einen Rahmen (2) des Innenraumsystems in verschiedenen Positionen, mit einer ersten Verbindungseinrichtung (23) zum Verbinden der einen und mehreren Komponenten (30) mit einem Sammelschienensystem (5) des Innenraumsystems, und mit einer zweiten Verbindungseinrichtung (25) zum Anschließen an Energie- und/oder Signalleitungen versehen ist, wobei die zweite Verbindungseinrichnung (25) an einem Ende des Komponentenmoduls angeordnet ist, dadurch gekennzeichnet, daß die erste Verbindungseinrichtung (23) an dem gegenüberliegenden Ende des Komponentenmoduls angeordnet ist, und daß die erste Verbindungseinrichtung (23) eine Mehrzahl von Kontakten aufweist, die derart angeordnet sind, daß sie geeignet zum Verbinden mit einer Mehrzahl von Sammelschienen (7) des Sammelschienensystems (5) des Innenraumsystems sind, welche Sammelschienen (7) im wesentlichen in einer Ebene, mit einem Abstand voneinander und parallel zueinander verlaufen, welche Ebene im wesentlichen senkrecht zu einer Linie verläuft, welche durch die gegenüberliegenden Enden des Komponentenmoduls verläuft.

9. Komponentenmodul nach Anspruch 8, dadurch gekennzeichnet, daß der Komponentenmodul in der Form eines Zuführmoduls mit Zuführkomponenten zum Herstellen einer Verbindung zwischen der externen Energiezufuhr, beispielsweise eine Steigleitung (Riser), und dem Sammelschienensystem (5) ist, wobei die zweite Verbindungseinrichtung (25) des Zuführmoduls zum Verbinden der Zuführkomponenten mit der externen Energiezufuhr ausgestattet sind, wobei die Energierichtung durch mindestens einen Zuführmodul entgegengesetzt zu der Energierichtung durch andere Zuführmodul(e) ist.

10. Trägermodul (20), geeignet für ein Innenraumsystem nach einem der vorherigen Ansprüche, wobei der Trägermodul (20) umfaßt:
eine Fixiereinrichtung (21) für eine oder mehrere elektrische Komponenten (30),
eine Fixiereinrichtung (26, 27) zum lösbaren Befestigen des Trägermoduls an einem Rahmen (2) in verschiedenen Positionen,
eine erste Verbindungseinrichtung (23) zum Verbinden von einem oder mehreren Komponenten (30) mit einem Sammelschienensystem (5) des Innenraum systems und eine zweite Verbindungseinrichtung (25) zum Anschließen an Energie- und/oder Signalleitungen, wobei
die zweite Verbindungseinrichtung (25) an einem Ende des Trägermoduls (20) angeordnet ist, dadurch gekennzeichnet, daß die erste Verbindungseinrichtung (23) an dem gegenüberliegenden Ende des Trägermoduls (20) angeordnet ist und die erste Verbindungseinrichtung (23) eine Mehrzahl von Kontakten aufweist, welche derart angeordnet sind, daß sie zum Anschluß an eine Mehrzahl von Sammelschienen (7) des Sammelschienensystems (5) des Innenraumsystems geeignet sind, welche Sammelschienen (7) im wesentlichen in einer Ebene, in einem Abstand voneinander und parallel zueinander verlaufen, wobei die Ebene im wesentlichen senkrecht zu einer Linie ist, welche durch die gegenüberliegenden Enden des Trägermoduls (20) verläuft.

11. Trägermodul (20) nach Anspruch 10, dadurch gekennzeichnet, daß eine Fixiereinrichtung (40) zum lösbaren Befestigen zweier oder mehrerer Trägermodule (20) aneinander vorgesehen ist.

12. Trägermodul (20) nach Anspruch 10 oder 11, dadurch gekennzeichnet, daß der Trägermodul (20), zumindest im Bereich der Fixiereinrichtung (21) für die elektrischen Komponenten, einen Querschnitt in der Gestalt eines I-Profils aufweist.

13. Trägermodul (20) nach Anspruch 12, dadurch gekennzeichnet, daß eine Schließeinrichtung (32) vorgesehen ist, um zumindest teilweise die Hohlräume (31) in dem I-Profil des Trägermoduls (20) zu verschließen.

14. Trägermodul (20) nach einem der Ansprüche 10 bis 13, dadurch gekennzeichnet, daß der Modul (20) aus Kunststoff, beispielsweise einem Thermoplast, hergestellt ist.

15. Trägermodul (20) nach einem der Ansprüche 10 bis 14, dadurch gekennzeichnet, daß der Modul eine spritzgegossene Komponente ist.

## Revendications

1. Système intérieur pour une armoire de commutation (1) pour la distribution de courant en provenance d'une alimentation en courant externe à une installation d'abonné, comprenant un bâti (2), un ou plusieurs modules formant composants et un système de bus d'alimentation (5) qui peut être relié à une alimentation en courant externe, dans lequel chaque module formant composant possède un support comprenant un ou plusieurs modules formant supports (20) et munis de moyens de fixation (21) pour un ou plusieurs composants électriques (30) , et est muni de moyens de fixation pour fixer, de manière amovible, ledit module formant composant au bâti dans différentes positions, de premiers moyens de connexion (23) pour relier lesdits un ou plusieurs composants au système de bus d'alimentation (5) et de seconds moyens de connexion (15) pour une connexion à des conducteurs de courant et/ou de signaux, dans lequel les seconds moyens de connexion (25) sont situés à une extrémité donnée du support (20), caractérisé en ce que les premiers moyens de connexion (23) sont situés à l'extrémité opposée du support et en ce que le système de bus d'alimentation (5) comprend une pluralité de bus d'alimentation (7) qui courent sensiblement dans un plan, à une certaine distance les uns des autres et parallèlement les uns aux autres, lequel plan est sensiblement perpendiculaire au plan de l'ouverture d'accès de l'armoire de commutation (1) et s'étend au voisinage de l'un des côtés de l'armoire de commutation (1).

2. Système intérieur selon la revendication 1, caractérisé en ce que le système est muni d'au moins un module formant composant sous la forme d'un module d'alimentation muni de composants d'alimentation pour réaliser une connexion entre l'alimentation en courant externe, par exemple une colonne montante, et le système de bus d'alimentation (5), dans lequel les seconds moyens de connexion (25) du module d'alimentation sont équipés pour relier les composants d'alimentation à l'alimentation en courant externe, le sens de l'énergie dans l'au moins un module d'alimentation étant inverse au sens de l'énergie dans l(es) autre(s) module(s) formant composant(s).

3. Système intérieur selon la revendication 1 ou 2, caractérisé en ce que le système est muni d'un module résiduel qui comporte une plaque de montage, fixée de manière amovible au bâti (2), pour des composants électriques non normalisés et/ou spécifiques.

4. Système intérieur selon la revendication 1, 2 ou 3, caractérisé en ce que le système de bus d'alimentation (5) est divisé en un système de bus secondaire d'alimentation pour des modules formant composants pour des groupes de puissance et en un système de bus secondaire d'alimentation qui court comme une extension de ce dernier, mais est électriquement isolé de ce dernier, pour des groupes d'éclairage.

5. Système intérieur selon l'une des revendications précédentes, caractérisé en ce que, même dans le cas d'un module formant composant comprenant plusieurs modules formant supports, le module formant composant est muni d'une plaque de couverture individuelle (35), qui s'étend sur une certaine distance au-dessus des modules formant supports (20) sur l'avant tout entier du module formant composant concerné, les modules formant supports étant munis de moyens de fixation (21) ou de certains des moyens de fixation pour des composants électriques.

6. Système intérieur selon l'une des revendications précédentes, caractérisé en ce que le bâti (2) comprend au moins un composant de support (4), qui est muni d'un motif denté, et en ce que le module formant composant possède au moins une nervure de localisation (26) pour positionner le module formant composant concerné dans le composant de support (4).

7. Système intérieur selon la revendication 6, caractérisé en ce que le bâti (2) est muni d'au moins deux composants de support munis d'un motif denté, lesquels composants de support peuvent être installés essentiellement parallèlement l'un à l'autre, et en ce que le module formant composant est également muni d'un bloc de localisation (27) pour positionner le module formant composant concerné dans le second composant de support (4).

8. Module formant composant approprié pour un système intérieur décrit dans l'une des revendications précédentes, le module formant composant comportant :
un support comprenant un ou plusieurs modules formant supports (20) et muni de moyens de fixation (21) pour un ou plusieurs composants électriques (30),
dans lequel le module formant composant est muni : de moyens de fixation (26, 27) pour fixer de manière amovible ledit module formant composant à un bâti (2) dudit système intérieur dans différentes positions,
de premiers moyens de connexion (23) pour relier le ou plusieurs composants (30) à un système de bus d'alimentation (5) dudit système intérieur, et
de seconds moyens de connexion (25) pour une connexion à des conducteurs de courant et/ou de signal,
dans lequel
les seconds moyens de connexion (25) sont situés au niveau d'une extrémité particulière du module formant composant,
caractérisé en ce que
les premiers moyens de connexion (23) sont situés au niveau de l'extrémité opposée du module formant composant, et en ce que
les premiers moyens de connexion (23) comprennent une pluralité de contacts agencés de façon à être appropriés pour une connexion à une pluralité de bus d'alimentation (7) du système de bus d'alimentation (5) du système intérieur, lesquels bus d'alimentation (7) courent sensiblement dans un plan particulier, à une certaine distance les uns des autres et parallèlement les uns aux autres, lequel plan est sensiblement perpendiculaire à une ligne passant par les extrémités opposées du module formant composant.

9. Module formant composant selon la revendication 8, caractérisé en ce que le module formant composant est sous la forme d'un module d'alimentation muni de composants d'alimentation pour réaliser une connexion entre l'alimentation en courant externe, par exemple une colonne montante, et le système de bus d'alimentation (5), dans lequel les seconds moyens de connexion (25) du module d'alimentation sont équipés pour relier les composants d'alimentation à une alimentation en courant externe, le sens de l'énergie dans l'au moins un module d'alimentation étant inverse au sens de l'énergie dans l(es) autre(s) module(s) formant composant(s).

10. Module formant support (20) approprié pour un système intérieur décrit dans l'une des revendications précédentes, le module formant support (20) comprenant :
des moyens de fixation (21) pour un ou plusieurs composants électriques (30),
des moyens de fixation (26, 27) pour fixer de manière amovible ledit module formant support à un bâti (2) dudit système intérieur dans différentes positions,
des premiers moyens de connexion (23) pour relier le ou plusieurs composants (30) à un système de bus d'alimentation (5) dudit système intérieur, et
des seconds moyens de connexion (25) pour une connexion à des conducteurs de courant et/ou de signal,
dans lequel
les seconds moyens de connexion (25) sont situés au niveau d'une extrémité particulière du module formant support (20),
caractérisé en ce que
les premiers moyens de connexion (23) sont situés au niveau de l'extrémité opposée du module formant support (20), et en ce que
les premiers moyens de connexion (23) comprennent une pluralité de contacts agencés de façon à être appropriés pour une connexion à une pluralité de bus d'alimentation (7) du système de bus d'alimentation (5) du système intérieur, lesquels bus d'alimentation (7) courent sensiblement dans un plan particulier, à une certaine distance les uns des autres et parallèlement les uns aux autres, lequel plan est sensiblement perpendiculaire à une ligne passant par les extrémités opposées du module formant support (20).

11. Module formant support (20) selon la revendication 10, caractérisé en ce que des moyens de fixation (40) sont prévus pour fixer de manière amovible deux ou plusieurs modules formant support (20) les uns aux autres.

12. Module formant support (20) selon la revendication 10 ou 11, caractérisé en ce que le module formant support (20) a une section transversale en forme de I, au moins dans la zone des moyens de fixation (21) pour le composant électrique.

13. Module formant support (20) selon la revendication 12, caractérisé en ce que des moyens de fermeture (32) sont prévus pour fermer au moins partiellement les cavités (31) dans la section en I du module formant support (20).

14. Module formant support (20) selon l'une des revendications 10 à 13, caractérisé en ce que ledit module (20) est fait de plastique, par exemple un thermoplastique.

15. Module formant support (20) selon l'une des revendications 10 à 14, caractérisé en ce que ledit module est un composant moulé par injection.
